(19) **Europäisches Patentamt / European Patent Office / Office européen des brevets**

(11) **EP 4 129 603 A1**

(12) # EUROPEAN PATENT APPLICATION
published in accordance with Art. 153(4) EPC

(43) Date of publication:
**08.02.2023 Bulletin 2023/06**

(21) Application number: **21782093.5**

(22) Date of filing: **24.03.2021**

(51) International Patent Classification (IPC):
**B29B 11/16** (1985.01)    **B29K 105/06** (1985.01)

(52) Cooperative Patent Classification (CPC):
**B29B 11/16**

(86) International application number:
**PCT/JP2021/012198**

(87) International publication number:
**WO 2021/200453 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020   JP 2020063088**

(71) Applicant: **Toray Industries, Inc.**
**Tokyo 103-8666 (JP)**

(72) Inventors:
• **AOKI, Junichi**
**Iyo-gun, Ehime 791-3193 (JP)**
• **FUJIWARA, Takayuki**
**Tokyo 103-8666 (JP)**
• **KOCHI, Shinji**
**Iyo-gun, Ehime 791-3193 (JP)**
• **KIDO, Daisuke**
**Iyo-gun, Ehime 791-3193 (JP)**
• **TAKEDA, Naoya**
**Iyo-gun, Ehime 791-3193 (JP)**
• **AIZAWA, Bon**
**Iyo-gun, Ehime 791-3193 (JP)**

(74) Representative: **Kador & Partner PartG mbB**
**Corneliusstraße 15**
**80469 München (DE)**

(54) **PREPREG AND FIBER-REINFORCED COMPOSITE MATERIAL**

(57)    Provided is a prepreg including reinforced fibers and a resin composition, in which when an average thickness of the prepreg is designated as D, a loss tangent tanδ at a slit processing temperature when the resin composition present in a portion located at a depth of D/10 from a surface of the prepreg is evaluated using an 8-mm plate at 50 rad/s or more is designated as y, and a water absorption amount when the prepreg collected in a size of $100 \times 100$ mm is immersed in 5-mm water for 5 minutes is designated as x (hereinafter, referred to as water pickup evaluation), a relationship of Formula 1 below is satisfied. Provided is a prepreg that provides a slit tape having excellent processability and quality, which is suitably used for producing a fiber-reinforced composite material using an automatic lamination device.

EP 4 129 603 A1

**Description**

TECHNICAL FIELD

The present invention relates to a prepreg that provides a slit tape having excellent processability and quality, which is suitably used for producing a fiber-reinforced composite material using an automatic lamination device.

BACKGROUND ART

Fiber-reinforced composite materials made of reinforced fibers such as glass fibers, carbon fibers and aramid fibers, and cured products of thermosetting resins such as unsaturated polyester resins, vinyl ester resins, epoxy resins, phenol resins, cyanate ester resins and bismaleimide resins have excellent mechanical properties such as strength and elastic modulus, heat resistance, and corrosion resistance, while being lightweight, so that they have been applied in many fields such as aircraft members, spacecraft members, automobile members, ship members, civil engineering materials, and sports equipment. In particular, in applications where high performance is required, fiber-reinforced composite materials using continuous fibers as reinforced fibers have been used. Carbon fibers with excellent specific strength and specific elastic modulus are widely used as reinforced fibers, and an epoxy resin having high mechanical properties, heat resistance and chemical resistance and excellent adhesion to carbon fibers are widely used as a matrix resin.

On the other hand, in recent years, particularly in the aircraft field, the application ratio of fiber-reinforced composite materials in aircraft has greatly increased in order to reduce the weight of the aircraft and improve fuel efficiency. In the case of manufacturing a large composite material such as an aircraft member, an automated tape layup (ATL) method, an automated fiber placement (AFP) method, and the like are used as a lamination method of prepregs using an automatic lamination device having more excellent productivity than hand layup. Among them, the AFP method is a method in which about ten to several tens of slit tapes are passed through a guide roll, converged on a machine head, and laminated on a substrate using an automatic lamination device, and is suitable for manufacturing a part having a relatively large number of curved surfaces such as an aircraft fuselage. The AFP method has been widely used in recent years because of its good material yield.

The slit tape used in the AFP method refers to a tape-shaped product obtained by slit-processing a wide prepreg in which reinforced fibers are arranged in one direction into a width of several mm to several cm in parallel to a fiber direction. When the slit tape is produced, a large amount of prepreg is often processed simultaneously in parallel at a time, and the prepreg to be used needs to have good slit processability. Poor slit processability refers to occurrence of troubles such as adhesion of a resin composition contained in a prepreg to a blade of a slitter and winding of reinforced fibers around a blade. In this case, a problem arises in that time for operations such as disassembling and cleaning a device is greatly increased to considerably lower productivity. When slit processability is poor, a resin or fiber at the end portion of the prepreg is taken by the blade to increase fluctuation in slit tape width, so that target width accuracy of the slit tape cannot be obtained, and appearance quality and quality of a laminate are deteriorated.

Patent Document 1 describes a slit tape obtained by curing a unidirectional prepreg using a reinforced fiber bundle without twists until the resin reaction rate of a matrix resin composition reaches 20 to 70% to obtain a semi-cured prepreg, and then cutting the semi-cured prepreg along the fiber direction of the reinforced fiber. This prepreg is excellent in straightness of reinforced fibers, is less likely to be twisted, has reduced tackiness on the tape surface, and is excellent in handleability.

Patent Document 2 describes a prepreg including a flexible polymer sheet on the surface of the prepreg, and adhesion of a resin to a blade can be suppressed.

PRIOR ART DOCUMENTS

PATENT DOCUMENTS

Patent Document 1: Japanese Patent Laid-open Publication No. 2016-155915
Patent Document 2: Japanese Patent No. 6250393

SUMMARY OF THE INVENTION

PROBLEMS TO BE SOLVED BY THE INVENTION

In the method described in Patent Document 1, the drapability of the prepreg is insufficient, and the slit processability is also insufficient.

In the method described in Patent Document 2, since the polymer sheet is disposed only on one surface of the prepreg, the suppression of adhesion of the resin to the blade is insufficient, and there is a problem in that the manufacturing cost also increases by using the polymer sheet.

An object of the present invention is to solve the above problems and to provide a prepreg for producing a slit tape, which is suitably used for producing a fiber-reinforced composite material using an automatic lamination device, the prepreg providing a slit tape having excellent slit processability and excellent quality.

SOLUTIONS TO THE PROBLEMS

In order to achieve the above-mentioned object, the present inventors have conducted intensive investigations and, as a result, have completed the following invention. That is, a prepreg of the present invention is a prepreg including reinforced fibers and a resin composition, in which when an average thickness of the prepreg is designated as D, a loss tangent tan$\delta$ at a slit processing temperature when a viscoelasticity measurement is performed at a measurement frequency of 50 rad/s or more for the resin composition present in a portion at a depth of D/10 from a surface of the prepreg is designated as y, and an impregnation rate evaluated by a water absorption amount when 5 mm of a reinforced-fiber-longitudinal-direction tip of a reinforced-fiber-longitudinal-direction piece of 100 mm × a width of 100 mm is immersed in water for 5 minutes is designated as x, a relationship of Formula 1 below is satisfied.

[Mathematical Formula 1]

$$y < 1.6 \times \left(\frac{9}{10}\right)^{x} \qquad \text{(Formula 1)}$$

EFFECTS OF THE INVENTION

According to the present invention, it is possible to provide a prepreg for producing a slit tape, which is suitably used for producing a fiber-reinforced composite material using an automatic lamination device, the prepreg providing a slit tape having excellent slit processability and excellent quality.

BRIEF DESCRIPTION OF THE DRAWINGS

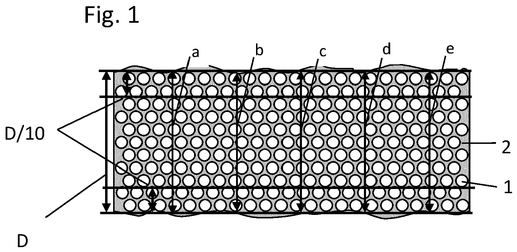

Fig. 1 illustrates a cross-section of a prepreg of the present invention.

EMBODIMENTS OF THE INVENTION

Hereinafter, the present invention will be described in more detail.

A prepreg of the present invention includes reinforced fibers and a resin composition.
The reinforced fibers are not particularly limited, and for example, carbon fibers, glass fibers, aramid fibers, silicon carbide fibers, polyester fibers, ceramic fibers, alumina fibers, boron fibers, metal fibers, mineral fibers, ore fibers, slag fibers, and the like can be used. Among these reinforced fibers, carbon fibers, glass fibers, and aramid fibers are preferred, carbon fibers by which a fiber-reinforced composite material having favorable specific strength and specific elastic modulus with lightweight and high strength is obtained are more preferred, and polyacrylonitrile (PAN)-based carbon fibers having excellent tensile strength are particularly preferred. The carbon fiber to be used may be appropriately used in the form of twisted yarns, untwisted yarns, twistless yarns, and the like.

The resin composition is not particularly limited, and a composition containing a thermoplastic resin or a thermosetting resin can be used. These resins may be used singly or can also be used in combination of two or more kinds thereof. When two or more resins are used in combination, the viscoelasticity of the resin composition can be easily adjusted, which is preferable.

The thermoplastic resin used in the present invention is not particularly limited, and for example, polyethersulfone (PES), polyetherethersulfone (PEES), polyphenylsulfone, polysulfone, polyester, a polymerizable macrocyclic molecule (for example, cyclic butylene terephthalate), a liquid crystal polymer, polyimide, polyetherimide, aramid, polyamide, polyester, polyketone, polyetherketone, polyetheretherketone (PEEK), polyetherketoneketone, polyurethane, polyurea, polyarylether, polyarylsulfide, polycarbonate, polyphenylene oxide (PPO), modified PPO, and the like can be used. These thermoplastic resins may be used singly or can also be used in combination of two or more kinds thereof. In the case of application for aircraft members and spacecraft members, it is preferable to use polyethersulfone (PES), polyetherketone, and polyetheretherketone (PEEK) having a high melting point and impact resistance, and among them, PES is preferred from the viewpoint of uniform solubility during heat curing.

The thermosetting resin used in the present invention is not particularly limited, and for example, a phenol formaldehyde resin, a urea formaldehyde resin, a 1,3,5-triazine-2,4,6-triamine (melamine) resin, a bismaleimide resin, an epoxy resin, a vinyl ester resin, a benzoxazine resin, a phenol resin, polyester, unsaturated polyester, a cyanate ester resin, and the like can be used. These thermosetting resins may be used singly or can also be used in combination of two or more kinds thereof. Among them, a bismaleimide resin, an epoxy resin, a vinyl ester resin, a cyanate ester resin, a benzoxazine resin, and a phenol resin are preferred, and among them, an epoxy resin is preferred.

The epoxy resin is not particularly limited, an epoxy resin having two or more glycidyl groups in one molecule is preferred, and examples thereof include bisphenol epoxy resins such as bisphenol A epoxy resins, bisphenol F epoxy resins, and bisphenol S epoxy resins; brominated epoxy resins such as tetrabromobisphenol A diglycidyl ethers; epoxy resins having a biphenyl skeleton; epoxy resins having a naphthalene skeleton; epoxy resins having a dicyclopentadiene skeleton; phenol novolac epoxy resins; cresol novolac epoxy resins; glycidyl amine epoxy resins such as N,N,O-triglycidyl-m-aminophenol, N,N,O-triglycidyl-p-aminophenol, N,N,O-triglycidyl-4-amino-3-methylphenol, N,N,N',N'-tetraglycidyl-4,4'-methylenedianiline, N,N,N',N'-tetraglycidyl-2,2'-diethyl-4,4'-methylenedianiline, N,N,N',N'-tetraglycidyl-m-xylylenediamine, N,N-diglycidylaniline and N,N-diglycidyl-o-toluidine; resorcinol diglycidyl ether; and triglycidyl isocyanurate. Among them, in the case of application for aircraft members and spacecraft members, it is preferable to use a glycidyl amine epoxy resin from which a cured product having high heat resistance and elastic modulus is obtained.

These epoxy resins may be used singly or can also be used in combination of two or more kinds thereof. By using two or more epoxy resins in combination, the viscoelasticity of the resin composition is easily adjusted, the tackiness properties of a prepreg to be obtained are excellent, and the rigidity and toughness of the cured product can be balanced, which is preferable. When two or more epoxy resins are used in combination, it is effective to use an epoxy resin having high fluidity and an epoxy resin having low fluidity at an arbitrary temperature in combination for fluidity control of the resin composition when a prepreg to be obtained is thermally cured. For example, in the case of using only an epoxy resin having high fluidity, when a matrix resin has high fluidity before its gelation during heat curing, the orientation of the reinforced fibers is disturbed, or the matrix resin flows out of the system, whereby a fiber volume content of a fiber-reinforced composite material to be obtained may be out of the predetermined range, resulting in that mechanical properties of the fiber-reinforced composite material to be obtained may be deteriorated. However, by using an epoxy resin having low fluidity in combination with an epoxy resin having high fluidity, deterioration of such physical properties can be suppressed.

The resin composition may contain a curing agent. The curing agent to be used is not particularly limited, and for example, cyanoguanidine, an aromatic amine compound, an aliphatic amine compound, an acid anhydride, a Lewis acid, substituted urea, imidazole, hydrazine, and the like can be used. Among them, from the viewpoint of heat resistance and mechanical properties, an aromatic amine compound is preferred. Examples of the aromatic amine compound include 3,3'-diisopropyl-4,4'-diaminodiphenylmethane, 3,3'-di-t-butyl-4,4'-diaminodiphenylmethane, 3,3'-diethyl-5,5'-dimethyl-4,4'-diaminodiphenylmethane, 3,3'-diisopropyl-5,5'-dimethyl-4,4'-diaminodiphenylmethane, 3,3'-di-t-butyl-5,5'-dimethyl-4,4'-diaminodiphenylmethane, 3,3',5,5'-tetraethyl-4,4'-diaminodiphenylmethane, 3,3'-diisopropyl-5,5'-diethyl-4,4'-diaminodiphenylmethane, 3,3'-di-t-butyl-5,5'-diethyl-4,4'-diaminodiphenylmethane, 3,3',5,5'-tetraisopropyl-4,4'-diaminodiphenylmethane, 3,3'-di-t-butyl-5,5'-diisopropyl-4,4'-diaminodiphenylmethane, 3,3',5,5'-tetra-t-butyl-4,4'-diaminodiphenylmethane, 4,4'-diaminodiphenylmethane, 4,4'-diaminodiphenyl sulfone, 3,3'-diaminodiphenyl sulfone, m-phenylenediamine, m-xylylenediamine, and diethyltoluenediamine. Among them, in the case of application for aircraft members and spacecraft members, it is preferable to use 4,4'-diaminodiphenyl sulfone and 3,3'-diaminodiphenyl sulfone from which a cured product, which is excellent in heat resistance and elastic modulus and has a small decrease in heat resistance due to linear expansion coefficient and moisture absorption, is obtained. These aromatic amine compounds may be used singly or can also be used in combination of two or more kinds thereof. The form of the curing agent when mixed with other components is not particularly limited, and may be any form of a powder and a liquid, and a powder and a liquid may be mixed and used. From the viewpoint of enhancing stability during storage, the curing agent is preferably a powder at 22°C.

The resin composition may contain a curing accelerator. The curing accelerator is not particularly limited, and examples thereof include a tertiary amine, a Lewis acid complex, an onium salt, an imidazole compound, and a urea compound.

The resin composition may contain a filler. The filler is not particularly limited, and for example, rubber particles, a coupling agent, thermosetting resin particles, thermoplastic resin particles, silica gel, carbon black, clay, carbon nanotubes, carbon particles, metal powder, and the like can be used.

When an average thickness of the prepreg is designated as D, a loss tangent tan$\delta$ at a slit processing temperature when a viscoelasticity of the resin composition present in a portion located at a depth of D/10 from a surface of the prepreg is evaluated at a measurement frequency of 50 rad/s or more using an 8-mm plate is designated as y, and an impregnation rate measured by a water pickup method described below is designated as x, the prepreg of the present invention needs to satisfy a relationship of Formula 1 below. By satisfying Formula 1, a prepreg that provides a slit tape having excellent slit processability and excellent quality is obtained.

[Mathematical Formula 2]

$$y < 1.6 \times \left(\frac{9}{10}\right)^{x}$$

(Formula 1)

Here, how to determine the average thickness D of the prepreg will be described in detail using Fig. 1. Fig. 1 illustrates a cross-section of a prepreg of the present invention including reinforced fibers 1 and a resin composition 2. A cross-section of the prepreg is photographed at a magnification of 200 times or more with an epi-illumination type optical microscope, an arbitrary position in a fiber direction is selected, distances between both surfaces at five arbitrary positions in a width direction at the selected arbitrary position, for example, at respective positions of a, b, c, d, and e illustrated in Fig. 1 are measured, and an average value thereof is calculated, so that the average thickness D of the prepreg can be determined.

The resin composition present in a portion located at a depth of D/10 from the surface of the prepreg can be obtained, for example, by peeling off the surface layer portion of the prepreg using a tape, exposing a portion where the depth from any one surface is D/10 while checking the thickness with an epi-illumination type optical microscope in the same manner as described above, and collecting the resin composition at the portion using a spatula. In the present invention, it is necessary that the loss tangent tan$\delta$ of the resin composition at portions where the depth from both surfaces is D/10 satisfies the present invention.

In the present invention, the loss tangent tan$\delta$ at a slit processing temperature as measured at a measurement frequency of 50 rad/s or more using an 8-mm plate is a value of the loss tangent tan$\delta$ obtained when the resin composition is measured by the following method using a dynamic viscoelasticity measuring device. Parallel plates having a diameter of 8 mm are used as upper and lower measurement jigs of the dynamic viscoelasticity measuring device, the resin composition to be measured is set between the upper and lower plates so that a distance between the plates is 0.5 mm, and then the tan$\delta$ is measured under conditions of a torsion mode, a measurement frequency of 50 rad/s or more, a temperature range of 5 to 200°C, and a temperature increase rate of 2°C/min. The value of tan$\delta$ at a slit processing temperature is read from the obtained curve of the temperature-loss tangent tan$\delta$, and this value is the loss tangent tan$\delta$ at a slit processing temperature in the present invention. Here, when the measurement frequency is less than 50 rad/s, since the viscoelasticity of the resin in the slit processing cannot be measured correctly, the measurement frequency needs to be 50 rad/s or more. As the dynamic viscoelasticity measuring device, for example, ARES-G2 (manufactured by TA instruments) can be used.

The slit processing temperature in the prepreg of the present invention is preferably any temperature within a range of 0 to 40°C, more preferably any temperature within a range of 10 to 30°C, and further preferably any temperature within a range of 15 to 25°C. The prepreg of the present invention needs to satisfy Formula 1 above in any temperature within the above ranges. When the tan$\delta$ of the resin composition is lower, the viscosity of the resin composition is lower, so that adhesion of the resin to the blade when the prepreg is slit can be suppressed. On the other hand, when the viscosity of the resin composition decreases, it becomes difficult for the reinforced fibers to be impregnated with the resin composition. When the degree of impregnation of the prepreg is low, the proportion of dry reinforced fibers that are not wet with the resin composition among the reinforced fibers contained in the prepreg increases. When dry reinforced fibers in the prepreg is large, the dry reinforced fibers are taken up by a slight amount of the resin composition attached to the blade during slit processing, and the reinforced fibers are drawn out from the end portion of the prepreg, so that the reinforced fibers are easily wound around the blade. Therefore, in order for the prepreg to exhibit good slit processability, it is necessary to balance both the tan$\delta$ and the degree of impregnation of the resin composition, and Formula 1 shows the relationship between the tan$\delta$ and the degree of impregnation of the resin composition. When Formula 1 is not satisfied, since the resin adheres to the blade, the reinforced fiber is wound around the blade, or the reinforced fiber is drawn out from the end portion of the prepreg when the prepreg is slit-processed, a slit tape with high width accuracy cannot be obtained, and it becomes difficult to perform slit processing for a long time.

The impregnation rate x of the prepreg by a water pickup method (WPU method) in the present invention is an index indicating the degree of impregnation of the resin in the prepreg. The impregnation rate x by the WPU method can be measured by the following method. A test piece having a size of a fiber-longitudinal-direction length × a width-direction (direction orthogonal to the fiber direction) length of 100 mm × 100 mm is cut out from the prepreg. When the width of the prepreg is less than 100 mm, the width-direction length of the test piece may be 100 mm or less, but the fiber-direction length is set to 100 mm. Next, after a mass W1 of the obtained test piece is measured, one side of the test piece is disposed so that the fiber direction of the test piece is perpendicular to the water surface, and a range of 5 mm from the end portion of the test piece (that is, 100 mm × 5 mm) is immersed in water for 5 minutes. The test piece immersed for 5 minutes is taken out from water, and moisture adhering to the surface of the test piece is wiped off with a rag or the like while being careful not to touch the immersed surface, and then a mass W2 of the test piece is measured. The impregnation rate x is a value expressed as a percentage obtained by dividing the mass (W2 - W1) of water absorbed by the test piece by W1. The lower the value of the impregnation rate x, the higher the degree of impregnation of the resin in the prepreg, indicating that voids between the reinforced fibers are well filled with the resin. The lower the impregnation rate x by the WPU method, the easier it is to satisfy Formula 1 above. When the impregnation rate x is 2.0% or less, winding of the reinforced fibers around the blade is reduced when the prepreg is slit-processed, so that processability is improved, which is preferable. The impregnation rate x is more preferably 1.5% or less, and further preferably 0.1 to 1.5%. By setting the impregnation rate x by the WPU method to 0.1% or more, a prepreg having good drapability is easily obtained. In order to lower the impregnation rate x by the WPU method, for example, it is effective to use a multiple-stage impregnation hot-melt method described below in the production of the prepreg.

When the prepreg of the present invention is slit-processed with a 28-mm round blade, a cutting distance until the reinforced fiber is wound around the round blade (hereinafter, referred to as the cutting distance) is preferably 10 m or more. When the cutting distance is 10 m or more, there is a tendency that when a large amount of prepreg is slit-processed, the frequency of unsustainable troubles that require disassembling and cleaning of a device, such as adhesion of the resin in the device or winding of a large amount of fluff, is low, and mass production processability is excellent. The cutting distance in the present invention is a processing distance of the prepreg from the slit processing to the start of winding of the reinforced fibers around a 28-mm round blade when the 28-mm round blade is set in an automatic cutting machine and the prepreg is slit-processed at a division speed of 18 m/min along the fiber direction. As the automatic cutting machine, for example, GERBERcutter (registered trademark) DSC manufactured by Gerber Technology LLC can be used. As the 28-mm round blade, a 28-mm circular blade (RB28) manufactured by OLEA CORPORATION can be used.

The prepreg of the present invention can be produced by various known methods. For example, when the main resin composition is a thermoplastic resin, a prepreg can be produced by a melting method, a powder method, a resin film impregnation method, a mixed weaving method, or the like. The melting method is a method in which a thermoplastic resin is melted by an extruder, and the inside of a fiber bundle is impregnated with the resin through continuous fibers in a melting bath. In a solvent method, the inside of a fiber bundle is impregnated with a solution obtained by dissolving a resin in a solvent. In the powder method, a thermoplastic resin powder is attached to reinforced fibers, and the reinforced fibers are melted and impregnated by heating.

When the main resin used in the prepreg of the present invention is a thermosetting resin, the prepreg can be produced by a known method such as a wet method, a hot-melt method, extrusion, spraying, or printing. As the wet method, the resin composition is dissolved in an organic solvent selected from acetone, methyl ethyl ketone, methanol, and the like to reduce the viscosity of the resin composition, the reinforced fiber is impregnated with the resin composition and then pulled up, and the organic solvent is evaporated using an oven or the like to obtain a prepreg. As the hot-melt method, a method of directly impregnating reinforced fibers with a matrix resin heated to reduce its viscosity, a method of impregnating reinforced fibers with a matrix resin by first preparing a release paper sheet with a resin film once coated with a matrix resin on a release paper or the like (hereinafter also referred to as "resin film"), then stacking a resin film on the reinforced fiber side from both sides or one side of the reinforced fibers, followed by heating and pressurizing, or the like can be used.

Examples of the method for producing the prepreg of the present invention by a hot-melt method include the following methods. A first method is a so-called single stage impregnation hot-melt method in which a resin film containing a resin composition that is a constituent element of the present invention is heated and pressurized from both sides or one side of a reinforced fiber so that the reinforced fiber is impregnated with a matrix resin in a single stage. A second method is a multiple-stage impregnation hot-melt method in which a matrix resin is applied to a resin film in multiple stages, followed by heating and pressurizing from both sides or one side of a reinforced fiber, so that the reinforced fiber is impregnated with the matrix resin. In the present invention, a multiple-stage impregnation hot-melt method also capable of impregnating a reinforced fiber with a resin composition having a low viscosity first, and then further impregnating the reinforced fiber with a resin composition having a high viscosity is preferred because good slit processability is easily obtained.

The prepreg of the present invention can be slit to a predetermined width by a known method to obtain a slit tape. The method for slitting the prepreg is not particularly limited, and examples thereof include a slitter equipped with a commonly used cutter, a cemented carbide blade cutter, an ultrasonic cutter, a round blade cutter, and the like.

The slit processing temperature when the prepreg is processed into a slit tape is preferably any temperature within a range of 0 to 40°C, more preferably any temperature within a range of 10 to 30°C, and further preferably any temperature within a range of 15 to 25°C. The slit processing temperature described herein is the temperature of the prepreg when the prepreg is slit. By setting the slit processing temperature to 0°C or higher, the drapability of the prepreg is good, and the brittleness of the resin is easily suppressed, so that the resin is easily slit without falling off during slit processing, and a prepreg having good quality is easily obtained. By setting the processing temperature to 40°C or lower, it is easy to suppress time degradation of the resin composition and tackiness of the prepreg, to easily suppress adhesion of the resin to the blade during slitting, and to obtain good slit processability. When a blade is used for the slit of the prepreg, the temperature of the blade is preferably equal to or lower than the surface temperature of the prepreg to be slit, and it is also preferable to cool the blade, since adhesion of the resin to the blade can be suppressed.

The slit tape obtained by slitting the prepreg of the present invention is suitably used in the case of producing a fiber-reinforced composite material using an automatic lamination device. When the slit tape is laminated using an automatic lamination device, it is preferable that the slit tape has appropriate tackiness at room temperature. More specifically, when the tackiness at 22°C is 0.21 kgf or more and 0.80 kgf, sticking properties are good, and it is easy to cope with repair when a lamination trouble occurs, which is preferable. The tackiness can be measured, for example, by measuring a prepreg using a tack tester (PICMA Tack Tester II: manufactured by Toyo Seiki Seisaku-sho, Ltd.). A prepreg to be measured is placed in the tack tester, and a stainless steel plate (SUS304) to which a 18 mm × 18 mm glass plate is attached is lowered from above the prepreg at a speed of 10 mm/min, immediately after the stainless steel plate is brought into contact with the prepreg, the stainless plate is raised at a speed of 10 mm/min, a peeling load when the stainless plate is peeled off from the prepreg is measured, and the measured value is defined as a tackiness value. In order to set the tackiness at 22°C in the above range, the loss tangent $\tan\delta$ at 22°C when the resin composition present in a portion located at a depth of D/10 from the surface of the prepreg is evaluated at 50 rad/s or more using an 8-mm plate is preferably 1.7 or more and 3.0 or less. Setting the $\tan\delta$ in this range is preferable not only from the viewpoint that the sticking properties of the prepreg is good and it is easy to cope with repair during lamination, but also from the viewpoint of facilitating alignment when a splice portion described below is produced.

When the slit tape is continuously laminated using an automatic lamination device, the slit tape is laminated while being heated by generally using a heater provided in a machine head of the automatic lamination device. Therefore, a complex viscosity $\eta^*$ at 35°C when the resin composition present in a portion located at a depth of D/10 from the surface of the prepreg is evaluated at 50 rad/s or more using an 8-mm plate is preferably $8\times10^3$ Pa·s or more and $2\times10^4$ Pa·s or less. When the complex viscosity $\eta^*$ is set in this range, it is easy to obtain sufficient sticking properties to the slit tape and to cope with repair when a lamination trouble occurs, which is preferable.

When the prepreg is slit, in order to lengthen the fiber-direction length of the slit tape thus obtained, the prepreg may be overlapped with another prepreg and pressure-bonded to prepare a splice portion, so that the fiber-direction length is lengthened. In this case, it is preferable that the adhesive strength is sufficient so that the pressure-bonded prepreg is not peeled off at the splice portion when the splice portion comes into contact with a roll in the process and turns. In order to make the splice portion less likely to peel off during the process, it is preferable that the shape followability of the prepreg is high. Since the prepreg has high shape followability, when the prepreg changes the traveling direction along the guide roll of the automatic lamination device, a force of a peeling mode is less likely to be applied to the splice portion, and the splice portion is less likely to be peeled off. On the other hand, when the shape followability is too high, folding of the slit tape in the width direction is likely to occur when the prepreg is redirected so as to twist 90 degrees between the guide rolls. Therefore, a drape angle $\theta$ (PP) as an index of the shape followability of the prepreg is preferably 7° or more and 17° or less. When the drape angle $\theta$ (PP) is in this range, the shape followability of the slit tape thus obtained tends to be high, splice detachment hardly occurs, and folding of the prepreg during an automatic lamination step hardly occurs.

The drape angle $\theta$ (PP) of the prepreg can be measured by the following method. The produced prepreg is cut into a width-direction length of 25 mm and a fiber-direction length of 300 mm. A portion having a width-direction length of 25 mm and a fiber-direction length of 100 mm at one end portion in the length direction of the cut prepreg is brought into close contact with a frame and fixed to the frame, and the remaining portion of the prepreg, that is, a portion having a width-direction length of 25 mm and a fiber-direction length of 200 mm is brought into a cantilever state protruding from the side surface of the frame. After the prepreg is fixed to the frame in this manner and left to stand still for 10 minutes, a distance A from the side surface of the frame to the prepreg end portion and a height B from the surface of the prepreg fixed to the frame to the end, which is not fixed, of the prepreg are measured, and the drape angle $\theta$ (PP) is calculated from the tangent values of the two sides. That is, a relationship of $\tan\theta$ (PP) = B/A is satisfied. The larger the drape angle $\theta$ (PP), the higher the shape followability.

In order to obtain a prepreg having a preferable drape angle θ (PP), a drape value C of a reinforced fiber bundle is preferably 3 cm or more and 22 cm or less. By setting the drape value C in this range, a prepreg having a preferable drape angle θ is easily obtained.

The drape value C of the reinforced fiber bundle can be measured, for example, by the following method. The reinforced fiber bundle is cut into a length of 1 m, the upper tip of the reinforced fiber bundle is fixed, a weight of 30 g is applied to the lower tip, and the reinforced fiber bundle is left to stand for 30 minutes. Thereafter, the weight is removed from the reinforced fiber bundle and the reinforced fiber bundle is cut into a length of 30 cm. A 5-cm one end of the cut reinforced fiber bundle is fixed to a measuring table, the reinforced fiber bundle corresponding to a length of 25 cm is brought into a cantilever state protruding from the table, and a horizontal distance (cm) from the tip of the reinforced fiber bundle at that time to the table from which the reinforced fiber bundle is drawn out is regarded as a drape value.

A carbon fiber-reinforced composite material of the present invention can be obtained in such a manner that the prepreg or the slit tape of the present invention is laminated, and when a thermosetting resin is contained, the resin is then cured by heating. From the viewpoint of suppressing voids and obtaining a uniform cured body, it is preferable to apply a pressure during molding. Here, as a method for applying heat and a pressure, a known method such as an autoclave molding method, a press molding method, a bag molding method, a wrapping tape method, or an internal pressure molding method can be used.

EXAMPLES

Hereinafter, the present invention will be described in detail with reference to Examples. The present invention is not limited to the following Examples. Materials used in Present Examples and Comparative Examples and various measurement methods are as follows. The unit of the blending amount of the resin composition in Tables 1 to 8 is parts by mass, measurement of various properties (physical properties) was performed under the environment of a temperature of 22°C and a relative humidity of 50% unless otherwise noted.

<Materials used in Examples>

(1) Reinforced fiber: carbon fiber

·"TORAYCA (registered trademark)" T800S-24K-10E (number of fibers: 24000, fineness: 1.033 tex, tensile modulus: 294 GPa, density: 1.8 g/cm$^3$, manufactured by Toray Industries, Inc.).

(2) Resin composition:

·"SUMI-EPOXY (registered trademark)" ELM434 (component: tetraglycidyldiaminodiphenylmethane, manufactured by Sumitomo Chemical Co., Ltd.).

·"jER (registered trademark)" 630 (component: triglycidyl-p-aminophenol, manufactured by Mitsubishi Chemical Corporation)

·"Araldite (registered trademark)" MY0510 (component: triglycidyl-p-aminophenol, manufactured by Huntsman Corporation)

·"jER (registered trademark)" 827 (component: bisphenol A type epoxy resin, manufactured by Mitsubishi Chemical Corporation)

·"jER (registered trademark)" 825 (component: bisphenol A type epoxy resin, manufactured by Mitsubishi Chemical Corporation)

·"jER (registered trademark)" 807 (component: bisphenol F type epoxy resin, manufactured by Mitsubishi Chemical Corporation)

·DICY7 (component: dicyandiamide, manufactured by Mitsubishi Chemical Corporation)

·"Omicure (registered trademark)" 24 (component: toluene bisdimethylurea, manufactured by Emerald Performance Materials, LLC)

·"SEIKACURE (registered trademark)" S (component: 4,4'-diaminodiphenylsulfone, manufactured by SEIKA CORPORATION)

·3,3'-DAS (component: 3,3'-diaminodiphenyl sulfone, manufactured by Konishi Chemical Inc Co., Ltd.)

"·VIRANTAGE (registered trademark)" VW-10700RFP (component: terminal hydroxyl group polyethersulfone, manufactured by Solvay Specialty Polymers)

·"VESTAKEEP (registered trademark)" 2000G (component: polyether ether ketone, manufactured by Daicel-Evonik Ltd.).

<Method for producing prepreg>

(1) Method for preparing thermosetting resin composition

Each of epoxy resins and thermoplastic resins each having a composition and a ratio described in Tables 1 to 8 was added to a kneader, heated to 160°C while being kneaded, and stirred as it was for 1 hour to dissolve the thermoplastic resin, thereby obtaining a transparent viscous liquid. This liquid was cooled to 70°C while being kneaded, and then each of curing agents described in Tables 1 to 8 was added and further kneaded to obtain a thermosetting resin composition.

(2) Method for producing prepreg

The thermosetting resin composition obtained as described above was applied onto a release paper using a coater to prepare a resin sheet with a resin basis weight of 31 $g/m^2$. Then, 72 fibers of "TORAYCA (registered trademark)" T800S-24K-10E were aligned in parallel to form a sheet such that the basis weight of the carbon fibers was 270 $g/m^2$. Thereafter, the resin sheets were stacked on both surfaces of the carbon fiber, the carbon fiber was impregnated with the thermosetting resin composition, the resin sheets were further stacked on both surfaces again, and the carbon fiber was impregnated with the thermosetting resin composition, thereby producing a unidirectional prepreg. Heating and pressurizing were performed a plurality of times or time for heating and pressurizing was extended as necessary so as to achieve the impregnation rate x shown in Tables 1 to 8.

<Various evaluation methods>

(1) Method for measuring average thickness D of prepreg

A cross-section of the prepreg was photographed at a magnification of 200 times using an epi-illumination type optical microscope (VHX-5000 (manufactured by KEYENCE CORPORATION)). The distances between surfaces at five positions arbitrarily selected on the direction (lateral direction) orthogonal to the fiber direction at arbitrary points in the fiber direction were measured, and the average value thereof was calculated to obtain the average thickness D.

(2) Method for measuring loss tangent $\tan\delta$ and complex viscosity $\eta^*$

The resin composition present in the portion located at a depth of D/10 from the surface of the prepreg was collected as follows.

The surface layer portion of the prepreg was peeled off using a tape, a portion where the depth from any one surface is D/10 was exposed while checking the thickness with an epi-illumination type optical microscope VHX-5000 (manufactured by KEYENCE CORPORATION)), and the resin composition at the portion was collected using a spatula.

The viscoelasticity of the resin composition collected in this manner was measured using a viscoelasticity measuring device (ARES-G2 (manufactured by TA instruments)). Flat parallel plates having a diameter of 8 mm were used as upper and lower measurement jigs of the measuring device, the resin composition was set between the upper and lower plates so that a distance between the plates was 0.5 mm, and then the viscoelasticity was measured in a torsion mode (measurement frequency: 77.25 rad/s) in a measurement temperature range of 5 to 200°C at a temperature increase rate of 2°C/min. The $\tan\delta$ at a slit processing temperature in the obtained curve of the temperature-loss tangent $\tan\delta$ and the complex viscosity $\eta^*$ at 35°C in the temperature-complex viscosity curve were read.

(3) Method for measuring impregnation rate (hereinafter, referred to as impregnation rate x) by WPU method

Five test pieces were cut out from a wide prepreg in the width direction into a size of 100 mm $\times$ 100 mm in the width direction $\times$ the fiber direction. Next, after the mass W1 of the obtained test piece was measured in advance, one side of the test piece was disposed so that the fiber direction of the test piece was perpendicular to the water surface, and a range of 5 mm from the end portion of the prepreg (that is, 100 mm $\times$ 5 mm) was immersed in water for 5 minutes. The test piece immersed was taken out from water, and moisture adhering to the surface of the test piece was wiped off with a rag or the like, and then the mass W2 of the test piece was measured. The impregnation rate x was an average value expressed as a percentage obtained by dividing the mass (W2 - W1) of water absorbed by the test piece by W1.

(4) Method for measuring cutting distance

When the prepreg was slit-processed at a division speed of 18 m/min along the fiber direction using GERBERcutter (registered trademark) DSC manufactured by Gerber Technology LLC as an automatic cutting machine and a 28-mm circular blade (RB28) manufactured by OLFA CORPORATION as a 28-mm circular blade, the processing distance of the prepreg from the start of the slit processing to the start of winding of the reinforced fibers around the round blade was measured. A case where the processing distance is 10 m or more was excellent in slit processability and was rated as "good" for cutting property determination. A case where the processing distance is less than 10 m was insufficient in slit processability and was rated as "poor" for cutting property determination.

(5) Method for measuring tackiness of prepreg

The tackiness of the prepreg was measured using a tack tester (PICMA Tack Tester II: manufactured by Toyo Seiki Seisaku-sho, Ltd.). A prepreg to be measured was placed in the tack tester, and a stainless steel plate (SUS304) to which a 18 mm $\times$ 18 mm glass plate was attached was lowered from above the prepreg at a speed of 10 mm/min, immediately after the stainless steel plate was brought into contact with the prepreg, the stainless plate was raised at a speed of 10 mm/min, a peeling load when the stainless plate was peeled off from the prepreg was measured, and the measured value was defined as a tackiness value of the prepreg. A case where the tackiness value of the prepreg is 0.21 kgf or more and 0.80 kgf or less was rated as "excellent" in sticking properties/repairing properties at time of starting AFP, and the other cases were rated as "acceptable".

(6) Sticking properties/drapability during AFP lamination

As shown in (2), a case where the complex viscosity $\eta^*$ at 35°C when the resin composition present in a portion located at a depth of D/10 is evaluated at 50 rad/s or more using an 8-mm plate is $8 \times 10^3$ Pa·s or more and $2 \times 10^4$ Pa·s or less was rated as "excellent" in sticking properties/repairing properties during AFP lamination, and the other cases were rated as "acceptable".

(7) Method for measuring drape θ (PP) of prepreg

The prepreg was cut into a width-direction length of 25 mm and a fiber-direction length of 300 mm, the cut prepreg having a width-direction length of 25 mm and a fiber-direction length of 100 mm was brought into close contact with the corners of a frame, and the prepreg was fixed to the frame with a tape. After the prepreg was fixed to the frame and left to stand still for 10 minutes, a distance from the side surface of the frame and a height from the surface of the prepreg fixed to the frame to the end, which was not fixed, of the prepreg were measured, and the drape angle θ (PP) was calculated from the tangent values of the two sides. A case where the drape angle θ is 7° or more and 17° or less was rated as "excellent" in the AFP processability, and the other cases were rated as "acceptable".

<Example 1>

A resin composition was prepared by the method described in the above (1) Method for preparing thermosetting resin composition with the composition described in Example 1 in Table 1. Then, a prepreg was produced by the method described in the above (2) Method for producing prepreg using this resin composition and the carbon fibers. The tanδ (y) at 31°C of the resin composition present in a portion located at a depth of D/10 of the obtained prepreg (hereinafter, referred to as the D/10 portion) was 1.45, the impregnation rate (x) was 0.50, and Formula 1 was satisfied. The cutting distance when slit processing was performed at 31°C was 21 m, and the cutting property determination was "good".

<Examples 2 to 10>

Prepregs were produced by the same method as in Example 1, except that the resin compositions shown in Tables 1 and 2 were used. The evaluation results are shown in Tables 1 and 2.

<Example 11>

A polyether ether ketone resin ("VESTAKEEP" 2000G (polyether ether ketone, manufactured by Daicel-Evonik Ltd.) powder having the composition described in Table 2 was dispersed in ethanol to prepare a suspension having a concentration of 5.5% by mass in a suspension bath. 36 carbon fibers were aligned in parallel to form a sheet such that the basis weight of the carbon fibers was 125 g/m$^2$.

Then, the two sheets were introduced into the suspension and immersed for 15 seconds, and then the two sheets were stacked and led out from the suspension bath as one laminated sheet. The obtained laminated sheet was dried at 150°C for 5 minutes. Subsequently, the laminated sheet was passed through a roller having a surface temperature of 400°C to melt and impregnate the resin, thereby obtaining a prepreg having a basis weight of 374 g/m$^2$.

The tan$\delta$ (y) at 19°C of the resin composition present in the D/10 portion of the obtained prepreg was 0.03, the impregnation rate (x) evaluated by a water pickup method was 0.05, and Formula 1 was satisfied. The cutting distance until the reinforced fiber was wound around the round blade when slit processing was performed at 19°C was 35 m, and the cutting property determination was "excellent".

<Examples 12 to 18>

Prepregs were produced by the same method as in Example 1, except that the resin compositions shown in Table 3 were used. The evaluation results are shown in Table 3.

<Examples 17, 19, 20, 21, and 22>

Prepregs were produced by the same method as in Example 1, except that the resin compositions shown in Table 4 were used. The results of the evaluation are shown in Table 4.

The loss factors tan$\delta$ at 22°C of the resin compositions present in the D/10 portion of Examples 17, 20, and 21 were 1.7, 2.4, and 3.0, respectively, the tackinesses of the prepreg were 0.21 kgf, 0.60 kgf, and 0.80 kgf, and the sticking properties/repairing properties during AFP lamination were "excellent". The loss factor tan$\delta$ at 22°C of the resin composition present in the D/10 portion of Example 19 was 1.4, the tackiness of the prepreg was 0.10 kgf, and the sticking properties/repairing properties during AFP lamination were "acceptable". The loss factor tan$\delta$ at 22°C of the resin composition present in the D/10 portion of Example 22 was 3.4, the tackiness of the prepreg was 1.00 kgf, and the sticking properties/repairing properties during AFP lamination were "acceptable".

<Examples 17, 19, 21, 22, and 23>

Prepregs were produced by the same method as in Example 1, except that the resin compositions shown in Table 5 were used. The results of the evaluation are shown in Table 5. The complex viscosities $\eta$* at 35°C of the resin compositions present in the D/10 portion were 6×10$^3$ Pa·s, 8×10$^3$ Pa·s, 1×10$^4$ Pa·s, 2×10$^4$ Pa·s, and 3×10$^4$ Pa·s in order of Examples 22, 21, 23, 17, and 19, and the sticking properties/repairing properties during AFP lamination were "excellent" in Examples 17, 21, and 23 and "acceptable" in Examples 19 and 22.

<Examples 17, 24, 25, and 26>

Prepregs were produced by the same method as in Example 1, except that the resin compositions described in Table 6 were used, and a reinforced fiber bundle having a drape value C of 12 cm, a reinforced fiber bundle having a drape value C of 24 cm, and a reinforced fiber bundle having a drape value C of 4 cm were used in Examples 17 and 26, Example 24, and Example 25, respectively. The results of the evaluation are shown in Table 6. The drape angle $\theta$ (PP) of the prepreg was 13° in Example 17, 5° in Example 24, and 18° in Example 25, the AFP processability was "excellent" in Example 17, and the AFP processability was "acceptable" in Examples 24 and 25. Example 26 was a prepreg including the same resin composition and the same drape value C of the reinforced fiber bundle as those in Example 17, the impregnation rate was 0.05%, the drape angle $\theta$ (PP) of the prepreg was 6°, and the AFP processability was "acceptable".

<Comparative Examples 1 to 10>

Prepregs were produced by the same method as in Example 1, except that the resin compositions shown in Tables 7 and 8 were used. The evaluation results are shown in Tables 7 and 8.

[Table 1]

| | | | | Unit | Example 1 | Example 2 | Example 3 | Example 4 | Example 5 |
|---|---|---|---|---|---|---|---|---|---|
| Resin composition | Thermosetting resin | Epoxy resin | Tetraglycidyl diaminodiphenylmethane ("SUMI-EPOXY (registered trademark)" ELM434) | Parts by mass | 100 | | 10 | 60 | 70 |
| | | | Triglycidyl-p-aminophenol ("jER (registered trademark)" 630) | Parts by mass | | 20 | 65 | 30 | |
| | | | Bisphenol A type epoxy ("jER (registered trademark)" 827) | Parts by mass | | 40 | | 10 | |
| | | | Bisphenol F type epoxy ("jER (registered trademark)" 807) | Parts by mass | | 40 | 25 | | 30 |
| | | Curing agent | Dicyandiamide (DICY7) | Parts by mass | | 3.6 | | | |
| | | | Toluene bisdimethylurea ("Omicure" 24) | Parts by mass | | 2 | | | |
| | | | 3,3-DDS (3,3'-DAS) | Parts by mass | | | | 47.8 | |
| | | | 4,4'-DDS (SEIKACURE-S) | Parts by mass | 44 | | 30 | | 41 |
| | Thermoplastic resin | | Polyethersulfone ("Virantage (registered trademark)" VW-10700RFP") | Parts by mass | 30 | 18 | 25 | 30 | 35 |
| | | | Polyether ether ketone ("VESTAKEEP 2000G granules") | Parts by mass | | | | | |

(continued)

| | | | Unit | Example 1 | Example 2 | Example 3 | Example 4 | Example 5 |
|---|---|---|---|---|---|---|---|---|
| Slit processability | Slit processing temperature | | °C | 31 | 26 | 20 | 14 | 9 |
| | Formula 1 | y | - | 1.45 | 1.30 | 1.20 | 1.10 | 0.80 |
| | | x | % | 0.50 | 1.00 | 2.00 | 3.00 | 5.00 |
| | | $1.6 \times (9/10)^x$ | - | 1.52 | 1.44 | 1.30 | 1.17 | 0.94 |
| | Cutting distance | | m | 21 | 28 | 42 | 39 | 38 |
| | Cutting property determination | | - | Good | Good | Good | Good | Good |

[Table 2]

| | | | Unit | Example 6 | Example 7 | Example 8 | Example 9 | Example 10 | Example 11 |
|---|---|---|---|---|---|---|---|---|---|
| Resin composition | Thermosetting resin | Epoxy resin | Tetraglycidyl diaminodiphenylmethane ("SUMI-EPOXY (registered trademark)" ELM434) | Parts by mass | 40 | 35 | 50 | | 45 | |
| | | | Triglycidyl-p-aminophenol ("jER (registered trademark)" 630) | Parts by mass | 40 | 45 | 40 | 100 | 35 | |
| | | | Bisphenol A type epoxy ("jER (registered trademark)" 827) | Parts by mass | 20 | 10 | 10 | | 20 | |
| | | | Bisphenol F type epoxy ("jER (registered trademark)" 807) | Parts by mass | | 10 | | | | |
| | | Curing agent | Dicyandiamide (DICY7) | Parts by mass | | | | | | |
| | | | Toluene bisdimethylurea ("Omicure" 24) | Parts by mass | | | | | | |
| | | | 3,3-DDS (3,3'-DAS) | Parts by mass | 21.1 | | 46.9 | | | |
| | | | 4,4'-DDS (SEIKACURE-S) | Parts by mass | 24 | 46 | | 55 | 45 | |
| | Thermoplastic resin | | Polyethersulfone ("Virantage (registered trademark)" VW-10700RFP") | Parts by mass | 25 | 30 | 25 | 40 | 30 | |
| | | | Polyether ether ketone ("VESTAKEEP 2000G granules") | Parts by mass | | | | | | 100 |

(continued)

| | | | Unit | Example 6 | Example 7 | Example 8 | Example 9 | Example 10 | Example 11 |
|---|---|---|---|---|---|---|---|---|---|
| Slit processability | | Slit processing temperature | °C | 21 | 23 | 10 | 30 | 15 | 19 |
| | Formula 1 | y | - | 1.30 | 1.00 | 0.50 | 0.90 | 1.30 | 0.03 |
| | | x | % | 1.30 | 1.50 | 2.20 | 2.10 | 0.40 | 0.05 |
| | | $1.6 \times (9/10)^x$ | - | 1.40 | 1.37 | 1.27 | 1.28 | 1.53 | 1.59 |
| | Cutting distance | | m | 45 | 49 | 44 | 45 | 43 | 35 |
| | Cutting property determination | | - | Good | Good | Good | Good | Good | Good |

[Table 3]

| | | | Unit | Example 12 | Example 13 | Example 19 | Example 15 | Example 16 | Example 17 | Example 18 |
|---|---|---|---|---|---|---|---|---|---|---|
| Resin composition | Thermosetting resin | Epoxy resin | Tetraglycidyl diaminodiphenylmethane ("SUMI-EPOXY (registered trademark)" ELM434) | Parts by mass | 55 | 55 | 55 | 55 | 55 | 55 | 55 |
| | | | Triglycidyl-p-aminophenol ("jER (registered trademark)" 630) | Parts by mass | 25 | 25 | 25 | 25 | 25 | 25 | 25 |
| | | | Bisphenol A type epoxy ("jER (registered trademark)" 825) | Parts by mass | 20 | 20 | 20 | 20 | 20 | 20 | 20 |
| | | Curing agent | 4,4'-DDS (SEIKACURE-S) | Parts by mass | 45 | 45 | 45 | 45 | 45 | 45 | 45 |
| | Thermoplastic resin | | Polyethersulfone ("Virantage (registered trademark)" VW-10700RFP") | Parts by mass | 33 | 33 | 33 | 33 | 33 | 33 | 33 |
| Slit processability | Slit processing temperature | | | °C | 16 | 16 | 16 | 16 | 20 | 20 | 20 |
| | Formula 1 | y | | - | 0.70 | 0.70 | 0.70 | 0.70 | 1.30 | 1.30 | 1.30 |
| | | x | | % | 0.50 | 1.40 | 1.90 | 2.40 | 0.50 | 1.40 | 1.90 |
| | | $1.6 \times (9/10)^x$ | | - | 1.52 | 1.38 | 1.31 | 1.24 | 1.52 | 1.38 | 1.31 |
| | Cutting distance | | | m | 30 | 38 | 30 | 20 | 35 | 45 | 40 |
| | Cutting property determination | | | - | Good | Good | Good | Good | Good | Good | Good |

[Table 4]

| Resin composition | | | | Unit | Example 17 | Example 19 | Example 20 | Example 21 | Example 22 |
|---|---|---|---|---|---|---|---|---|---|
| Resin composition | Thermosetting resin | Epoxy resin | Tetraglycidyl diaminodiphenylmethane ("SUMI-EPOXY (registered trademark)" ELM434) | Parts by mass | 55 | 55 | 55 | 55 | 55 |
| | | | Triglycidyl-p-aminophenol ("jER (registered trademark)" 630) | Parts by mass | 25 | 25 | 25 | 25 | 25 |
| | | | Bisphenol A type epoxy ("jER (registered trademark)" 825) | Parts by mass | 20 | 20 | 20 | 20 | 20 |
| | | Curing agent | 4,4 '-DDS (SEIKACURE-S) | Parts by mass | 45 | 45 | 45 | 45 | 45 |
| | Thermoplastic resin | | Polyethersulfone ("Virantage (registered trademark)" VW-10700RFP") | Parts by mass | 33 | 36 | 30 | 26 | 24 |
| Slit processability | Slit process ing temperature | | | °C | 20 | 22 | 18 | 16 | 15 |
| | Formula 1 | | y | - | 1.30 | 1.30 | 1.30 | 1.30 | 1.30 |
| | | | x | % | 1.40 | 1.40 | 1.40 | 1.40 | 1.40 |
| | | | $1.6 \times (9/10)^x$ | - | 1.38 | 1.38 | 1.38 | 1.38 | 1.38 |
| | Cutting distance | | | m | 45 | 45 | 45 | 45 | 45 |
| | Cutting property determination | | | - | Good | Good | Good | Good | Good |
| AFP processability | Resin properties | | tangent $\tan\delta$ at 22°C | - | 1.7 | 1.4 | 2.4 | 3.0 | 3.4 |
| | Tackiness properties | | Tackiness of prepreg | kgf | 0.21 | 0.10 | 0.60 | 0.80 | 1.00 |
| | Processability | | Sticking properties properties/repairing at time of starting AFP | - | Excellent | Acceptable | Excellent | Excellent | Acceptable |

[Table 5]

| | | | | Unit | Example 17 | Example 19 | Example 21 | Example 22 | Example 23 |
|---|---|---|---|---|---|---|---|---|---|
| Resin composition | Thermosetting resin | Epoxy resin | Tetraglycidyl diaminodiphenylmethane ("SUMI-EPOXY (registered trademark)" ELM434) | Parts by mass | 55 | 55 | 55 | 55 | 55 |
| | | | Triglycidyl-p-aminophenol ("jER (registered trademark)" 630) | Parts by mass | 25 | 25 | 25 | 25 | 25 |
| | | | Bisphenol A type epoxy ("jER (registered trademark)" 825) | Parts by mass | 20 | 20 | 20 | 20 | 20 |
| | | Curing agent | 4,4'-DDS (SEIKACURE-S) | Parts by mass | 45 | 45 | 45 | 45 | 45 |
| | Thermoplastic resin | | Polyethersulfone ("Virantage (registered trademark)" VW-10700RFP") | Parts by mass | 33 | 36 | 26 | 24 | 28 |
| Slit processability | Slit processing temperature | | | °C | 20 | 22 | 16 | 15 | 17 |
| | Formula 1 | | y | - | 1.30 | 1.30 | 1.30 | 1.30 | 1.30 |
| | | | x | % | 1.40 | 1.40 | 1.40 | 1.40 | 1.40 |
| | | | $1.6 \times (9/10)^x$ | - | 1.38 | 1.38 | 1.38 | 1.38 | 1.38 |
| | Cutting distance | | | m | 45 | 45 | 45 | 45 | 45 |
| | Cutting property determination | | | - | Good | Good | Good | Good | Good |
| AFP processability | Resin properties | | Complex viscosity $\eta^*$ at 35°C | Pa·s | $2 \times 10^4$ | $3 \times 10^4$ | $8 \times 10^3$ | $6 \times 10^3$ | $1 \times 10^4$ |
| | Processability | | Sticking properties/repairing properties during AFP lamination | - | Excellent | Acceptable | Excellent | Acceptable | Excellent |

[Table 6]

| | | | | Unit | Example 17 | Example 24 | Example 25 | Example 26 |
|---|---|---|---|---|---|---|---|---|
| Resin composition | Thermosetting resin | Epoxy resin | Tetraglycidyl diaminodiphenylmethane ("SUMI-EPOXY (registered trademark)" ELM434) | Parts by mass | 55 | 55 | 55 | 55 |
| | | | Triglycidyl-p-aminophenol ("jER (registered trademark)" 630) | Parts by mass | 25 | 25 | 25 | 25 |
| | | | Bisphenol A type epoxy ("jER (registered trademark)" 825) | Parts by mass | 20 | 20 | 20 | 20 |
| | | Curing agent | 4,4'-DDS (SEIKACURE-S) | Parts by mass | 45 | 45 | 45 | 45 |
| | Thermoplastic resin | | Polyethersulfone ("Virantage (registered trademark)" VW-10700RFP") | Parts by mass | 30 | 30 | 30 | 30 |
| Slit processability | Slit processing temperature | | | °C | 20 | 20 | 20 | 20 |
| | Formula 1 | | y | - | 1.30 | 1.30 | 1.30 | 1.30 |
| | | | x | % | 1.40 | 1.40 | 1.40 | 0.05 |
| | | | $1.6 \times (9/10)^{\wedge}x$ | - | 1.38 | 1.38 | 1.38 | 1.59 |
| | Cutting distance | | | m | 45 | 42 | 43 | 15 |
| | Cutting property determination | | | - | Good | Good | Good | Good |
| AFP processability | Reinforced fiber | | Drape value C of reinforced fiber bundle | cm | 12 | 24 | 4 | 12 |
| | Prepreg | | Drape angle θ (PP) of prepreg | ° | 13 | 5 | 18 | 6 |
| | AFP processability | | | - | Excellent | Acceptable | Acceptable | Acceptable |

[Table 7]

| | | | | Unit | Comparative Example 1 | Comparative Example 2 | Comparative Example 3 | Comparative Example 4 | Comparative Example 5 |
|---|---|---|---|---|---|---|---|---|---|
| Resin composition | Thermosetting resin | Epoxy resin | Tetraglycidyl diaminodiphenylmethane ("SUMI-EPOXY (registered trademark)" ELM434) | Parts by mass | 60 | | 60 | 70 | 50 |
| | | | Triglycidyl-p-aminophenol ("IER (registered trademark)" 630) | Parts by mass | | 20 | | | 15 |
| | | | Bisphenol A type epoxy ("jER (registered trademark) " 827) | Parts by mass | | 40 | | 30 | 10 |
| | | | Bisphenol F type epoxy ("jER (registered trademark) " 807) | Parts by mass | 40 | 40 | 40 | | 25 |
| | | Curing agent | Dicyandiamide (DICY7) | Parts by mass | | 8 | | | |
| | | | Toluene bisdimethylurea ("Omicure" 24) | Parts by mass | | 2 | | | |
| | | | 3,3-DDS (3,3'-DAS) | Parts by mass | | 35.1 | 39.3 | 19.9 | 41.2 |
| | | | 4,4'-DDS (SEIKACURE-S) | Parts by mass | 39.3 | | | 19.7 | |
| | Thermoplastic resin | | Polyethersulfone ("Virantage (registered trademark)" VW-10700RFP") | Parts by mass | 20 | 12 | 27 | 28 | 30 |
| | | | Polyether ether ketone ("VESTAKEEP 2000G aranules") | Parts by mass | | | | | |

(continued)

| | | Unit | Comparative Example 1 | Comparative Example 2 | Comparative Example 3 | Comparative Example 4 | Comparative Example 5 |
|---|---|---|---|---|---|---|---|
| Slit processability | Slit processing temperature | °C | 25 | 24 | 22 | 23 | 24 |
| | Formula 1 — y | - | 1.75 | 1.50 | 1.30 | 1.20 | 1.10 |
| | Formula 1 — x | % | 0.50 | 1.00 | 2.00 | 3.00 | 5.00 |
| | $1.6 \times (9/10)^x$ | - | 1.52 | 1.44 | 1.30 | 1.17 | 0.94 |
| | Cutting distance | m | 2 | 3 | 8 | 1 | 3 |
| | Cutting property determination | - | Poor | Poor | Poor | Poor | Poor |

[Table 8]

| | | Unit | Comparative Example 6 | Comparative Example 7 | Comparative Example 8 | Comparative Example 9 | Comparative Example 10 |
|---|---|---|---|---|---|---|---|
| Resin composition | Thermosetting resin — Epoxy resin: Tetraglycidyl diaminodiphenylmethane ("SUMI-EPOXY (registered trademark)" ELM434) | Parts by mass | 55 | 55 | 55 | 55 | 55 |
| | Triglycidyl-p-aminophenol ("IER (registered trademark)" 630) | Parts by mass | 25 | 25 | 25 | 25 | 25 |
| | Bisphenol A type epoxy ("IER (registered trademark)" 825) | Parts by mass | 20 | 20 | 20 | 20 | 20 |
| | Curing agent: 4,4'-DDS (SEIKACURE-S) | Parts by mass | 45 | 45 | 45 | 45 | 45 |
| | Thermoplastic resin: Polyethersulfone ("Virantage (registered trademark)" VW-10700RFP") | Parts by mass | 33 | 33 | 33 | 33 | 33 |
| Slit processability | Slit processing temperature | °C | 20 | 20 | 22 | 22 | 22 |
| | Formula 1 — y | - | 1.30 | 1.30 | 1.70 | 1.70 | 1.70 |
| | Formula 1 — x | % | 2.40 | 4.00 | 0.50 | 1.40 | 4.00 |
| | $1.6 \times (9/10)^x$ | - | 1.24 | 1.05 | 1.52 | 1.38 | 1.05 |
| | Cutting distance | m | 9 | 5 | 7 | 8 | 3 |
| | Cutting property determination | - | Poor | Poor | Poor | Poor | Poor |

INDUSTRIAL APPLICABILITY

The fiber-reinforced composite material obtainable from the prepreg of the present invention can be used suitably for a wide variety of applications such as aerospace applications including primary structural members such as the fuselage, main wings, tail wings and floor beams of an aircraft, secondary structural materials such as flaps, ailerons, cowls, fairings and interior materials, rocket motor casings and an artificial satellite structural members, structural materials of moving bodies such as motor vehicles, ships and railway vehicles, building materials, blades of wind mills, and computer applications such as IC trays and housings of laptop computers.

DESCRIPTION OF REFERENCE SIGNS

1: Reinforced fiber
2: Resin composition
a, b, c, d, e: Position where thickness of prepreg is measured
D: Average thickness of prepreg
D/10: Portion located at depth of D/10 from surface of prepreg

**Claims**

1. A prepreg comprising:

   reinforced fibers and;
   a resin composition,
   wherein when an average thickness of the prepreg is designated as D, a loss tangent tanδ at a slit processing temperature when a viscoelasticity measurement is performed at a measurement frequency of 50 rad/s or more for the resin composition present in a portion located at a depth of D/10 from a surface of the prepreg is designated as y, and an impregnation rate evaluated by a water absorption amount when 5 mm of a reinforced-fiber-longitudinal-direction tip of a reinforced-fiber-longitudinal-direction piece of 100 mm × a width of 100 mm is immersed in water for 5 minutes is designated as x, a relationship of Formula 1 below is satisfied:
   [Mathematical Formula 1]

$$y < 1.6 \times \left(\frac{9}{10}\right)^{x}$$

(Formula 1).

2. The prepreg according to claim 1, wherein the impregnation rate x is 2.0% or less.

3. The prepreg according to claim 2, wherein the impregnation rate x is 1.5% or less.

4. The prepreg according to claim 3, wherein the impregnation rate x is 0.1 to 1.5%.

5. The prepreg according to any one of claims 1 to 4, wherein, when slit processing is performed with a 28-mm round blade, a cutting distance until the reinforced fiber is wound around the round blade is 10 m or more.

6. The prepreg according to any one of claims 1 to 5, wherein the slit processing temperature is any temperature within a range of 10 to 30°C.

7. The prepreg according to claim 6, wherein the slit processing temperature is any temperature within a range of 15 to 25°C.

8. The prepreg according to any one of claims 1 to 7, wherein a tackiness of the prepreg at 22°C is 0.21 kgf or more and 0.80 kgf or less.

9. The prepreg according to any one of claims 1 to 8, wherein a complex viscosity $\eta^*$ at 35°C of the resin composition present in the portion located at a depth of D/10 from the surface of the prepreg is $8 \times 10^3$ Pa·s or more and $2 \times 10^4$ Pa·s or less.

10. The prepreg according to any one of claims 1 to 9, wherein a drape angle $\theta$ of the prepreg at 22°C is 7° or more and 17° or less.

11. A slit tape obtained by slit-processing the prepreg according to any one of claims 1 to 10.

12. A fiber-reinforced composite material obtained by heat-curing the prepreg according to any one of claims 1 to 10 or the slit tape according to claim 11.

Fig. 1

## INTERNATIONAL SEARCH REPORT

International application No.

PCT/JP2021/012198

### A. CLASSIFICATION OF SUBJECT MATTER
B29B 11/16(2006.01)i; B29K 105/06(2006.01)n
FI: B29B11/16; B29K105:06
According to International Patent Classification (IPC) or to both national classification and IPC

### B. FIELDS SEARCHED

Minimum documentation searched (classification system followed by classification symbols)
B29B11/16; B29K105/06

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2020/040153 A1 (TORAY INDUSTRIES, INC.) 27 February 2020 (2020-02-27) | 1–12 |
| A | WO 2012/147401 A1 (TORAY INDUSTRIES, INC.) 01 November 2012 (2012-11-01) | 1–12 |
| A | JP 2019-147876 A (MITSUBISHI CHEMICAL CORPORATION) 05 September 2019 (2019-09-05) | 1–12 |
| A | JP 5-208396 A (TOSHIBA MACHINE CO., LTD.) 20 August 1993 (1993-08-20) | 1–12 |

☐ Further documents are listed in the continuation of Box C.    ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 03 June 2021 (03.06.2021) | 15 June 2021 (15.06.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application no. |
| --- |
| PCT/JP2021/012198 |

| Patent Documents referred in the Report | Publication Date | Patent Family | Publication Date |
| --- | --- | --- | --- |
| WO 2020/040153 A1 | 27 Feb. 2020 | (Family: none) | |
| WO 2012/147401 A1 | 01 Nov. 2012 | US 2014/0037939 A1 EP 2703432 A1 | |
| JP 2019-147876 A | 05 Sep. 2019 | (Family: none) | |
| JP 5-208396 A | 20 Aug. 1993 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016155915 A

- JP 6250393 B